# EUROPEAN PATENT APPLICATION

(11) **EP 4 195 342 A1**
(43) Date of publication of application: **14.06.2023**
(21) Application number: 22208965.8
(22) Date of filing: 23.11.2022
(51) Int. Cl.: H01M 10/04, H01M 10/0585, H01M 50/103, H01M 50/105, H01M 50/46, H01M 50/474, H01M 50/586, H01M 10/42, H01M 10/052

(54) **SECONDARY BATTERY**

(30) Priority: 23.11.2021 KR 20210162251
(71) Applicant: Samsung SDI Co., Ltd., Yongin-si, Gyeonggi-do 17084 (KR)
(72) Inventor: Choi, Kyu Gil, 17084 Yongin-si, Gyeonggi-do (KR); Kim, Jun Sik, 17084 Yongin-si, Gyeonggi-do (KR)
(74) Representative: Gulde & Partner

(57) **Abstract**

A secondary battery (10) includes: an electrode assembly (200) including a first electrode plate (210), a second electrode plate (230), and a separator (250) between the first electrode plate (210) and the second electrode plate (230); a case (100) accommodating the electrode assembly (200); and a shock absorbing portion (400) on at least one side of the electrode assembly (200) to absorb shock. According to embodiments of the present disclosure, a bonding force between separators (250) is strengthened by the shock absorbing portion (400), and, thus, the separators (250) are not separated even by an external shock. In addition, even if the alignment of electrode plates (210, 230) is poor during heat treatment of side surfaces of the electrode assembly, an amount of shrinkage of the separators (250) can be constantly adjusted.

## Description

### BACKGROUND

### 1. Field

Aspects of embodiments of the present disclosure relate to a secondary battery and a method of manufacturing the same.

### 2. Description of the Related Art

In general, batteries are largely divided into primary batteries and secondary batteries. Primary batteries are typically cylindrical batteries, and secondary batteries may be divided into prismatic batteries and cylindrical batteries. A prismatic battery uses a metal can or pouch as an exterior material, and a battery using a pouch may be referred to as a pouch-type battery.

The prismatic battery is generally manufactured through the steps of: manufacturing a wound or stacked electrode assembly of a negative electrode plate, a separator, and a positive electrode plate; accommodating the electrode assembly in a prismatic can or a prismatic pouch; and injecting an electrolyte solution.

In a secondary battery having a stack-type electrode assembly, the size of a separator is larger than that of a negative electrode plate and a positive electrode plate, and an outermost separator of the electrode assembly may be turned over or partly separated when falling.

The above information disclosed in this Background section is provided for enhancement of understanding of the background of the invention and, therefore, it may contain information that does not constitute prior art.

### SUMMARY

According to an aspect of embodiments of the present disclosure, a secondary battery having improved stability of an electrode assembly is provided. According to another aspect of embodiments of the present disclosure, a secondary battery having an improved current collecting structure is provided.

A secondary battery according to one or more embodiments of the present disclosure may include: an electrode assembly (e.g., a stack-type electrode assembly) including a first electrode plate, a second electrode plate, and a separator between the first electrode plate and the second electrode plate; a case accommodating the electrode assembly; and a shock absorbing portion provided on at least one side of the electrode assembly to absorb shock and prevent or substantially prevent bending of the separator.

The electrode assembly may be a stack-type electrode assembly.

A size of the separator may be larger than a size of the first electrode plate and the second electrode plate.

The shock absorbing portion may be located at an end of the separator.

The shock absorbing portion may be located at two opposite ends of the separator.

The shock absorbing portion may be located at each free end of the separator.

The shock absorbing portion may be located between the separators. In particular, it may be positioned on the inner side between both ends of the separators.

The shock absorbing portion may include an organic solvent.

The shock absorbing portion may adhere the end of the separator and an end of another separator.

The organic solvent may have an insulating property, a non-reactive property that does not react with an electrolyte, and an adhesive property.

The organic solvent may include any of PP, PE, PTFE, EPDM, PVdF, acrylic, and a rubber-based adhesive.

According to a further aspect of the invention, a method of manufacturing a secondary battery is provided, which comprises attaching a plurality of first electrode plates to a first side of a separator, attaching a plurality of second electrode plates to a second side of the separator opposite to the first side, bending a portion of the separator located between the first electrode plates, cutting the bent portions of the separator to form the electrode assembly in the form of a stack, and providing the shock absorbing portion on at least one side of the electrode assembly.

The shock absorbing portion may be provided between ends of the separators which are formed to protrude farther outward than the first electrode plate and the second electrode plate.

### BRIEF DESCRIPTION OF DRAWINGS

FIG. 1 is a partially exploded perspective view of a secondary battery according to an embodiment of the present disclosure.
FIG. 2 is a perspective view illustrating a state in which an electrode assembly of the secondary battery of FIG. 1 is inserted into a case.
FIG. 3 is an enlarged cross-sectional view of a part of the electrode assembly of the secondary battery of FIG. 1.

### DETAILED DESCRIPTION

Some example embodiments of the present invention are provided to more completely explain the present invention to those skilled in the art, and the following example embodiments may be modified in various other forms. That is, the present invention may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a secondary battery according to an embodiment of the present disclosure will be described in further detail with reference to the accompanying drawings.

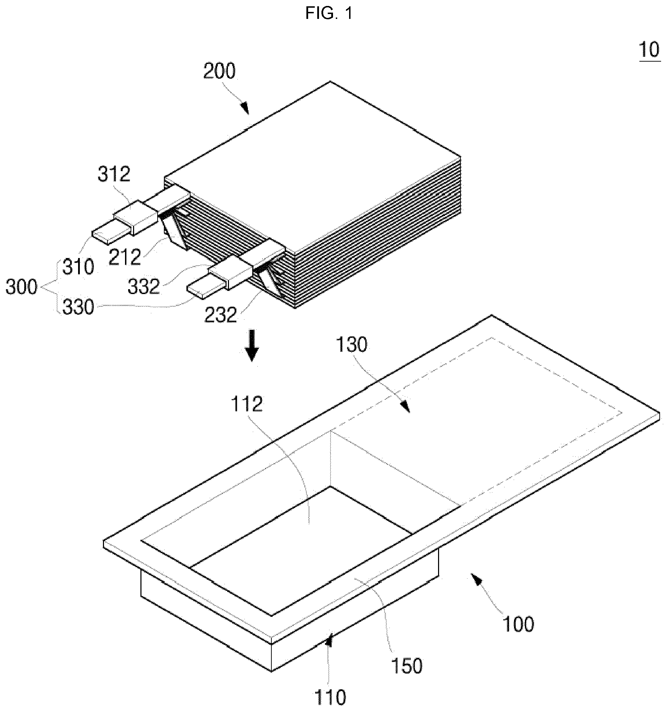

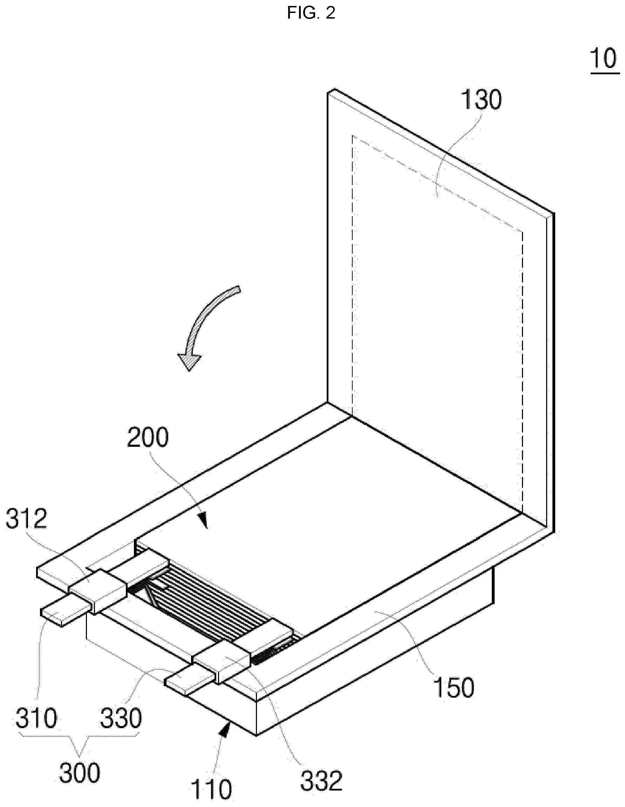

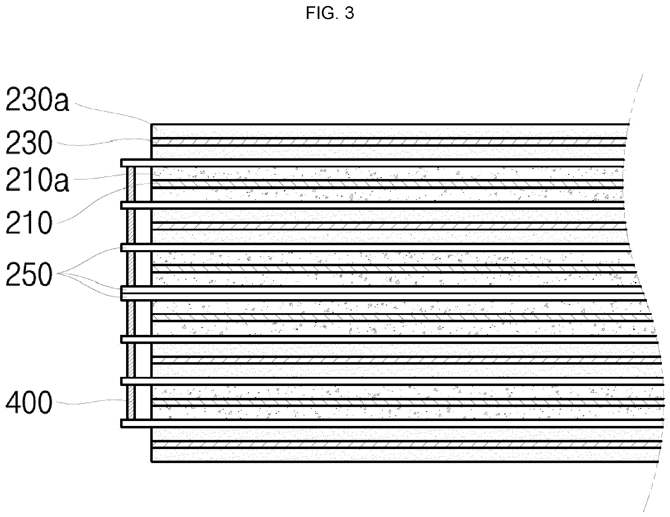

FIG. 1 is a partially exploded perspective view of a secondary battery according to an embodiment of the present disclosure; FIG. 2 is a perspective view illustrating a state in which an electrode assembly of the secondary battery of FIG. 1 is inserted into a case; and FIG. 3 is an enlarged cross-sectional view of a part of an electrode assembly of the secondary battery of FIG. 1.

As shown in FIGS. 1 and 2, a secondary battery 10 according to an embodiment of the present disclosure may include a case 100, an electrode assembly 200 accommodated in the case 100, and lead terminals 300 for electrically connecting the electrode assembly 200 to the outside. For example, the electrode assembly 200 may be stacked in a stack form.

The case 100 functions to accommodate and seal the electrode assembly 200 together with an electrolyte. The case 100 may be referred to as a pouch, a case, a pouch case, a laminate case, or the like. In an embodiment, the case 100 may be bent such that ends of the plate-shaped exterior material face each other to configure a side as a lower case 110 and another side as an upper case 130, The lower case 110 may be provided with a recess 112 formed by pressing or drawing a surface. The electrode assembly 200 is accommodated in the recess 112. In the lower case 110, a flat portion around the recess 112 becomes a sealing portion 150 that is sealed with the upper case 130. The sealing portion 150 is a part sealed by heat sealing after being in close contact with the upper case 130.

The electrode assembly 200 is formed by winding or stacking a stack structure in which a first electrode plate 210 and a second electrode plate 230 formed in a foil or film shape and a separator 250 for insulating the same from each other are stacked. In the present disclosure, an example of the electrode assembly 200 having a stack structure will be described.

As an example, the first electrode plate 210 may be a negative electrode, and the second electrode plate 230 may be a positive electrode, but, alternatively, the first electrode plate 210 may be a positive electrode, and the second electrode plate 230 may be a negative electrode.

The first electrode plate 210 as a negative electrode may be formed by coating a first electrode active material 210a, such as graphite or carbon, on a first electrode current collector formed of a metal foil, such as copper, a copper alloy, nickel, or a nickel alloy. A first electrode uncoated portion to which the first electrode active material 210a is not applied may be formed in a portion of the first electrode current collector. For example, a first electrode substrate tab 212 may be formed by pressing the first electrode uncoated portion by means of a press to have a certain shape. As an example, the first electrode substrate tab 212 may have a rectangular shape. The first electrode substrate tab 212 may be electrically connected to a first lead terminal 310 to be electrically connected to the outside of the secondary battery 10. Accordingly, the first electrode substrate tab 212 becomes a passage for current flow toward the first lead terminal 310.

The second electrode plate 230 as a positive electrode may be formed by coating a second electrode active material 230a, such as a transition metal oxide, on a second electrode current collector formed of a metal foil, such as aluminum or an aluminum alloy. A second electrode uncoated portion to which the second electrode active material 230a is not applied may be formed in a portion of the second electrode current collector. For example, a second electrode substrate tab 232 may be formed by pressing the second electrode uncoated portion by means of a press to have a certain shape. As an example, the second electrode substrate tab 232 may have a rectangular shape. The second electrode substrate tab 232 may be electrically connected to a second lead terminal 330 to be electrically connected to the outside of the secondary battery 10. Accordingly, the second electrode substrate tab 232 becomes a passage for current flow toward the second lead terminal 330.

The separator 250 is interposed between the first electrode plate 210 and the second electrode plate 230. The separator 250 prevents or substantially prevents a short circuit between the first electrode plate 210 and the second electrode plate 230 and enables movement of lithium ions. To this end, the separator 250 may be formed to be larger than the first electrode plate 210 and the second electrode plate 230. As an example, the separator 250 may be made of polyethylene, polypropylene, or a composite film of polyethylene and polypropylene, but is not limited thereto.

The lead terminals 300 include the first lead terminal 310 and the second lead terminal 330. In a manufacturing process of the secondary battery 10, a plurality of first electrode substrate tabs 212 are collected to a side and welded to the first lead terminal 310, and a plurality of second electrode substrate tabs 232 are collected to another side and welded to the second lead terminal 330. A welding method may be resistance welding, ultrasonic welding, laser welding, or the like, but the welding method is not limited in the present disclosure. A first insulating tape 312 and a second insulating tape 332 may be attached on the first lead terminal 310 and the second lead terminal 330, respectively. The first insulating tape 312 and the second insulating tape 332 are attached to portions in contact with the case 100 to prevent or substantially prevent a short circuit.

In the secondary battery having the above-described structure, a method of stacking the electrode assembly 200 will be described further.

After being arranged to be spaced apart from each other between two separators 250, a plurality of first electrode plates 210 may be attached to one of the separators 250. For instance, four or more first electrode plates 210 may be attached to one of the separators 250. Thereafter, a plurality of second electrode plates 230 may be attached to the another one of the separators 250. For instance, four or more second electrode plates 230 may be attached to another one of the separators 250. The separators may be located on top of each other so that the first electrode plates 210 overlap the second electrode plates 230 with one of the separators 250 therebetween. Then, the separators 250 may be wound so as to be bent between the first electrode plates 210 and bent portions (e.g., curved portions) of the separators 250 are then cut to form the electrode assembly 200 in the form of a stack. The first electrode substrate tabs 212 may be welded together at a side and the second electrode substrate tabs 232 may be welded together at another side, respectively, and then welded to the first lead terminal 310 and the second lead terminal 330, respectively (of the lead tab). The connection may also be made after winding the separator. The thus formed electrode assembly 200 is accommodated in the case 100, and, after the electrolyte is injected, the case 100 is sealed to form the secondary battery 10.

In the above-described process, a shock absorbing portion 400 may be additionally provided to improve stability of an electrode assembly 200 when an impact due to, for example, falling, occurs, thereby forming the electrode assembly 200.

Referring to FIG. 3, the shock absorbing portion 400 may be provided between ends of the separators 250 formed to be larger than the first electrode plate 210 and the second electrode plate 230. After forming the electrode assembly 200 and before inserting the same into the case 100, the shock absorbing portion 400 may be provided between the first electrode substrate tab 212 and the separator 250 disposed at an opposite end of the second electrode substrate tab 232. The shock absorbing portion is located between the separators, and may be precisely positioned on the inner side between both ends of the separators.

As an example, the shock absorbing portion 400 may be made of an organic solvent having adhesive properties. The organic solvent may be an insulating material to prevent or substantially prevent a short circuit between the first electrode plate 210 and the second electrode plate 230. In addition, the organic solvent may be a non-reactive material that does not react to an electrolyte so as not to affect cell characteristics and has adhesiveness to impart adhesion between the separators 250. Additionally, the organic solvent may have elasticity to absorb shock when falling, and may have a melting point higher than the bonding temperature between the separator and the electrode plate to prevent or substantially prevent deformation during a manufacturing process. As an example, the organic solvent may be selected from PP, PE, PTFE, EPDM, PVdF, acrylic, a rubber-based adhesive, and the like. The shock absorbing portion 400 may be formed by applying or impregnating an organic solvent between the separators 250. The organic solvent is then cured to be made solid. Since the size of the separator 250 is larger than the size of the first electrode plate 210 and the second electrode plate 230, the end of the separator 250 is shaped to protrude outward farther than the first electrode plate 210 and the second electrode plate 230. The protruding region may be defined as a remaining region. As an example, the shock absorbing portion 400 may be provided to cover the entire remaining region. In addition, as an example, the shock absorbing portion 400 may be provided to cover a portion of the remaining region. However, the shock absorbing portion 400 may be provided to cover at least a certain region (e.g., a predetermined region) from the end of the separator 250. As an example, when the electrode assembly 200 is accommodated in the recess 112 in a state in which the end of the separator 250 is folded, the "predetermined region" may be in a range from the end of the separator 250 to the folded portion. Alternatively, the "predetermined region" may be in a range from the end of the separator 250 to a region just before the active material application area of the electrode assembly 200. This may prevent or substantially prevent the shock absorbing portion 400 for absorbing the shock and the end of the separator 250 from being separated, turned over, or bent when an external shock occurs. Since the ends of the separators 250 are adhered to each other by means of the absorbing portion 400 to then be firmly coupled, structural stability of the electrode assembly 200 can be secured even when an external shock is transmitted.

In addition, even if the end of a separator shrinks during heating for adhesion of the separator and an electrode plate, a shock absorbing portion made of an organic solvent may fix the end of the separator, and, thus, the shrinkage rate of the separator is lower than that of a structure without a shock absorbing portion. In addition, even if the end of each separator is shrunk, the separator can be shrunk in a certain amount to be at similar levels by the shock absorbing portion. Even if such shrinkage of the separator occurs, the amount of shrinkage of the separator is not smaller than that of the electrode plate separator. Thus, even if the alignment of electrode plates is poor during the heat treatment of side surfaces of the electrode assembly, the amount of shrinkage of the separators can be constantly adjusted.

According to embodiments of the present disclosure, the bonding force between separators is strengthened by the shock absorbing portion, and, thus, the separators may not be separated even by an external shock.

In addition, even if the alignment of electrode plates is poor during the heat treatment of side surfaces of the electrode assembly, the amount of shrinkage of the separators can be constantly adjusted.

While the foregoing description sets forth one or more embodiments for carrying out the present disclosure, the present disclosure is not limited to the described embodiments, and it will be understood by a person skilled in the art that various changes in form and details may be made therein without departing from the scope of the present disclosure as set forth in the following claims.

## Claims

1. A secondary battery (10) comprising:
an electrode assembly (200) including a first electrode plate (210), a second electrode plate (230), and a separator (250) between the first electrode plate (210) and the second electrode plate (230);
a case (100) accommodating the electrode assembly (200); and
a shock absorbing portion (400) on at least one side of the electrode assembly (200) to absorb shock.

2. The secondary battery (10) of claim 1, wherein a size of the separator (250) is larger than a size of the first electrode plate (210) and the second electrode plate (230).

3. The secondary battery (10) of claim 1 or 2, wherein the shock absorbing portion (400) is located at an end of the separator (250).

4. The secondary battery (10) of one of the preceding claims, wherein the shock absorbing portion (400) comprises an organic solvent.

5. The secondary battery (10) of one of the preceding claims, wherein the shock absorbing portion (400) adheres the end of the separator (250) and an end of another separator (250).

6. The secondary battery (10) of claim 4, wherein the organic solvent has an insulating property, a non-reactive property that does not react with an electrolyte, and an adhesive property.

7. The secondary battery (10) of claim 6, wherein the organic solvent comprises any of PP, PE, PTFE, EPDM, PVdF, acrylic, and a rubber-based adhesive.

8. The secondary battery (10) of one of the preceding claims, wherein the electrode assembly (200) is a stack-type electrode assembly (200).

9. A method of manufacturing a secondary battery (10) according to one of the preceding claims, the method comprising:
attaching a plurality of first electrode plates (210) to a first side of the separator (250);
attaching a plurality of second electrode plates (230) to a second side of the separator (250) opposite to the first side;
bending a portion of the separator (250) located between the first electrode plates (210);
cutting the bent portions of the separator (250) to form the electrode assembly (200) in the form of a stack; and
providing the shock absorbing portion (400) on at least one side of the electrode assembly (200).

10. The method of claim 9, wherein the shock absorbing portion (400) is provided between ends of the separators (250), which are formed to protrude farther outward than the first electrode plate (210) and the second electrode plate (230).
